# EUROPEAN PATENT APPLICATION

(11) **EP 1 533 089 A1**
(43) Date of publication of application: **25.05.2005**
(21) Application number: 04026587.8
(22) Date of filing: 09.11.2004
(51) Int. Cl.: B26D 1/56, B23D 25/10, B21D 35/00

(54) **Methods and apparatus for cutting a moving material**

(30) Priority: 19.11.2003 US 716809
(71) Applicant: The Bradbury Company, Inc., Moundridge, Kansas 67107 (US)
(72) Inventor: Bradbury, Philip E., St. George, Utah 84790 (US)
(74) Representative: von Samson-Himmelstjerna, Friedrich R.

(57) **Abstract**

Methods and apparatus for cutting a continuously moving material (101) are disclosed. An example apparatus includes a rotary press (102) having a first ram (114A) with a first pressing face (210) and a second ram (114B) with a second pressing face (212) opposing the first pressing face. The first ram is disposed between and rotatably coupled to a first rotating gear (110A) and a second rotating gear (110B) at an off-center distance from the rotational axis of the first and second rotating gears. The second ram disposed between and rotatably coupled to a third rotating gear and a fourth rotating gear at an off-center distance from the rotational axis of the third and fourth rotating gears. Rotation of the first, second, third, and fourth rotating gears causes the first and second pressing faces to move relative to each other and to reciprocate in opposing directions along substantially parallel paths. The first and second pressing faces include material cutting devices (206,208) that work cooperatively to shear, punch, or otherwise cut the continuously moving material.

## Description

### FIELD OF THE DISCLOSURE

The present disclosure relates generally to material production processes and, more particularly, to methods and apparatus for cutting a moving material.

### BACKGROUND

Material presses commonly used within mass production or manufacturing system environments and within individual parts fabrication environments (e.g., machine shops) are often used to cut (e.g., punch, shear, etc.) a material such as, for example, sheet metals, strip materials, continuous web materials, etc. In general, different types of material presses are configured to cut stationary and moving materials. Cutting stationary materials is generally accomplished using standard material presses having opposing rams that move toward and away from each other along a substantially vertical path. However, moving materials are typically cut using presses having cutting tools that move in the direction of the moving material such as, for example, flying-die/shear material presses and rotary material presses.

Flying-die/shear material presses are similar to standard material presses. However, flying-die/shear material presses have cutting tools that are configured to move (i.e., extend and retract) in the same direction as a moving material. Rotary material presses typically have cutting blades attached to rotating drums or cylinders configured to penetrate non-stationary or continuously moving materials. All of the above-described material presses provide well-known advantages and disadvantages related to their functional operations and operational costs.

Standard material presses and flying-die/shear material press use conventional cutting tools such as, for example, punch and die sets and cut-off blade and cut-off ram sets to cut a stationary material. Typically, the conventional cutting tools are mounted to the faces of opposing press rams that travel in a single vertical plane toward and away from each other. In general, because the press rams travel along a single vertical plane, the cutting edges of the cutting tools are implemented using relatively simple planar cutting members that are perpendicular to the stationary material. While standard material presses may use conventional cutting tools to cut a stationary material, standard material presses typically cannot cut a non-stationary or moving material without stopping the material or without causing significant damage to the cutting tools and/or the material.

Flying-die/shear material presses may also use conventional cutting tools that are extended horizontally at the same speed and direction of a moving material while shearing or punching the moving material. In this manner, the moving material can maintain a constant linear speed. The cutting tools are then retracted to their original position to repeat the process. Although flying-die/shear material presses can cut a moving material, these types of presses usually require a relatively complex design to enable the horizontal extending and retracting movements of the cutting tools in combination with the vertical punching, shearing or cutting motion. Although flying-die/shear material presses are configured to cut moving materials, the material throughput of flying-die/shear material presses is relatively low compared to that or rotary material presses.

Rotary material presses are typically configured to cut non-stationary or moving materials using special cutting tools mounted to the perimeter of two counter-rotating barrel-shaped rams. For example, rotary shearing tools may be mounted to a pair of rotary rams so that as the rams counter-rotate, the cutting surfaces of the shearing tools meet every 360° rotation of the rams at opposing sides of the material. As the shearing tools meet and pass each other, they cut through the material. The material throughput of rotary presses is typically greater than that of standard material presses and flying-die/shear material presses. However, due to the cutting action, rotary material presses are limited to cutting relatively thin-gauge material.

The maintenance required for the cutting tools of standard material presses and flying-die material presses is simpler and less costly than the maintenance required for rotary material press cutting tools. The cutting faces of standard material press cutting tools require simple grinding equipment and relatively low operator skill because of the relatively simple flat surfaces used to implement the cutting faces. However, more sophisticated grinding equipment and greater operator skill is required for the maintenance of rotary material press cutting tools. The operator and the grinding equipment must posses the capability to follow the precise radius of curvature of the original cutting surfaces.

Although a standard material press is simpler and less costly to maintain and operate than a rotary material press, the standard material press lacks the ability to cut a non-stationary or moving material without marring or damaging the material and/or the cutting tools. Flying-die/shear presses address the issue of cutting moving materials. However, flying-die/shear presses fail to provide the production speed (e.g., material throughput) achieved by rotary material presses. On the other hand, while rotary material presses may be able to effectively cut a non-stationary or moving material in a high-speed production environment, rotary material presses are limited to cutting relatively thin-gauge material and require more complicated maintenance procedures that result in relatively higher operational costs.

### BRIEF DESCRIPTION OF THE DRAWINGS

FIG. 1 is a side elevational view of an example production system including an example rotary press for cutting a moving material.

FIG. 2 is an enlarged side elevational view of the example rotary press of FIG. 1.

FIG. 3 is a front elevational view of the example rotary press of FIGS. 1 and 2 in an open-ram configuration.

FIG. 4 is a front elevational view of the example rotary press of FIGS. 1 and 2 in a closed-ram configuration.

FIG. 5 is an example time sequence view depicting the operation of the example rotary press of FIGS. 1 and 2.

FIG. 6 is an example material forming process that uses the example rotary press of FIGS. 1 and 2.

FIG. 7 is an isometric view of a portion of an example beam that may be produced by the example material forming process of FIG. 6.

### DETAILED DESCRIPTION

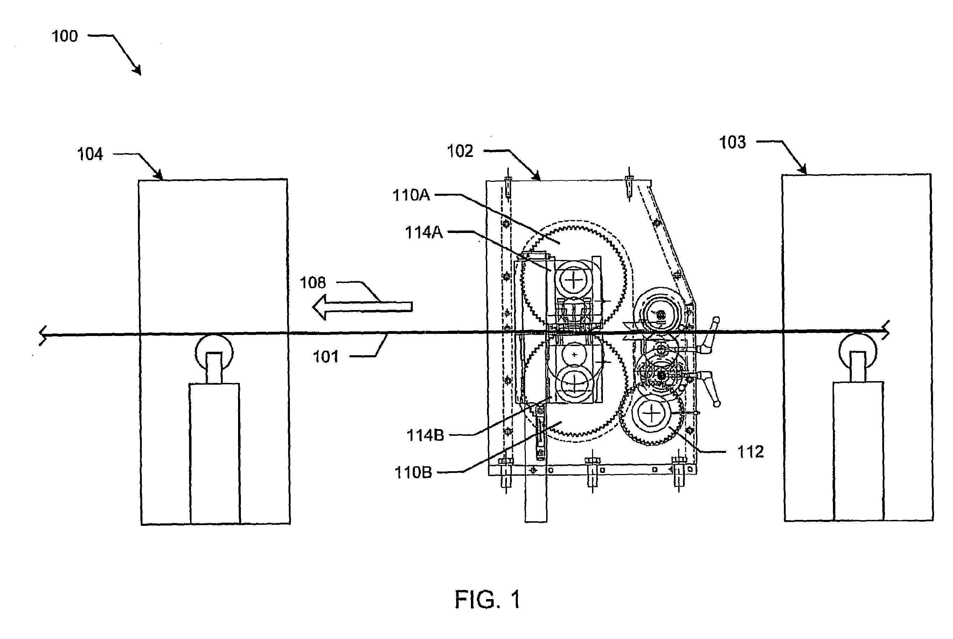

FIG. 1 is a side elevational view of an example production system 100 that may process a moving material 101 using an example rotary press 102. The example production system 100 may be part of, for example, a continuously moving material manufacturing system. Such a continuously moving material manufacturing system may include a plurality of subsystems that modify or alter the material 101 using processes that, for example, punch, shear, and/or fold the material 101. The material 101 may be a metallic strip material supplied on a roll or may be any other metallic or non-metallic material. Additionally, the continuous material manufacturing system may include the example production system 100, which as described in greater detail below is configured to perform one or more material altering processes (e.g., cutting processes) on the material 101 as it moves through the rotary press 102.

The example rotary press 102 may be disposed between a first operating unit 103 and a second operating unit 104. The material 101 travels through the first operating unit 103, the rotary press 102, and the second operating unit 104 in a direction generally indicated by the arrow 108. The first operating unit 103 may be a continuous material delivery system that transports the material 101 to the rotary press 102 by driving the material 101 towards the rotary press 102. Additionally, the first and second operating units 103 and 104 may be any desired type of operating unit and may be configured to perform any type of process associated with a continuously moving material manufacturing system or the like.

During operation, the rotary press 102 receives the material 101 from the first operating unit 103 and shears, punches, or otherwise cuts or penetrates the material 101. The second operating unit 104 may then transport the processed (e.g., cut) material away from the rotary press 102 and toward another processing system. After the rotary press 102 has sheared, punched, or otherwise cut or penetrated the material 101, the material 101 may be taken away or moved away in a continuous manner from the rotary press 102 by the second operating unit 104. Alternatively, the first operating unit 103 may be configured to drive or propel the processed material 101 through the rotary press 102 and toward the second operating unit 104.

As described in detail below, the rotary press 102 may be configured to shear, punch, or otherwise cut or penetrate the material 101 as it moves through the rotary press 102 using, for example, conventional cutting tools such as those used in standard material presses. For example, the rotary press 102 may be configured to cut or penetrate the material 101 without stopping the material 101. As described above, the rotary press 102 may be used within a production system such as the example production system 100. Alternatively, the rotary press 102 may be used as a standalone machine. Additionally, the rotary press 102 may be configured to shear, punch, or otherwise cut or penetrate any continuously moving material such as, for example, steel, aluminum, other metallic materials, plastic, fiberglass, wire, cable, etc.

As shown in FIG. 1, the rotary press 102 includes an upper spur gear 110A that is directly engaged to (i.e., meshes with) a lower spur gear 110B. A drive gear 112 is shown by way of example as being directly engaged to the lower spur gear 110B and may be mechanically coupled to a drive motor (not shown). An upper ram 114A and a lower ram 114B are rotatably coupled to the upper spur gear 110A and the lower spur gear 110B, respectively.

The upper spur gear 110A, the lower spur gear 110B, and the drive gear 112 work cooperatively to move the upper ram 114A along an upper generally circular or elliptical path and the lower ram 114B along a lower generally circular or elliptical path. In particular, it should be noted that, as described herein, the upper spur gear 110A may be configured to move the upper ram 114A along a generally circular path or a generally elliptical path and the lower spur gear 110B may be configured to move the lower ram 114B along a generally circular path or a generally elliptical path. A generally elliptical path may be achieved by using cam-shaped rotary members to implement the gears 110A and 110B. However, the gears 110A, 110B, and 112 may be implemented using any type of gears or other drive members having any shape that enable rotation about a rotational axis. Additionally, the upper spur gear 110A may directly engage the lower spur gear 110B and the lower spur gear 110B may directly engage the drive gear 112. In this configuration, the drive gear 112 may drive the spur gears 110A and 110B to cause the spur gears 110A and 110B to rotate about their respective rotational axes.

The upper ram 114A and the lower ram 114B are rotatably coupled to the spur gears 110A and 110B, respectively, and travel along respective generally circular or elliptical paths. The rotation of the spur gears 110A and 110B causes the rams 114A and 114B to travel in substantially coplanar directions relative to each other and cooperatively impact the material 101 as it moves through the rotary press 102. The rams 114A and 114B may be mechanically coupled to material penetration or cutting devices such as, for example, conventional cutting tools (i.e., punch and die sets, cut-off blade and cut-off ram sets). Additionally, the rams 114A and 114B are configured to provide sufficient structural strength to maintain their structural integrity while impacting (e.g., cutting) the material 101 as it moves (e.g., on a continuous basis) through the rotary press 102.

As described in greater detail below, the gears 110A, 110B, and 112 and the rams 114A and 114B work cooperatively to shear, punch, or otherwise cut or penetrate the material 101 as it moves through the rotary press 102.

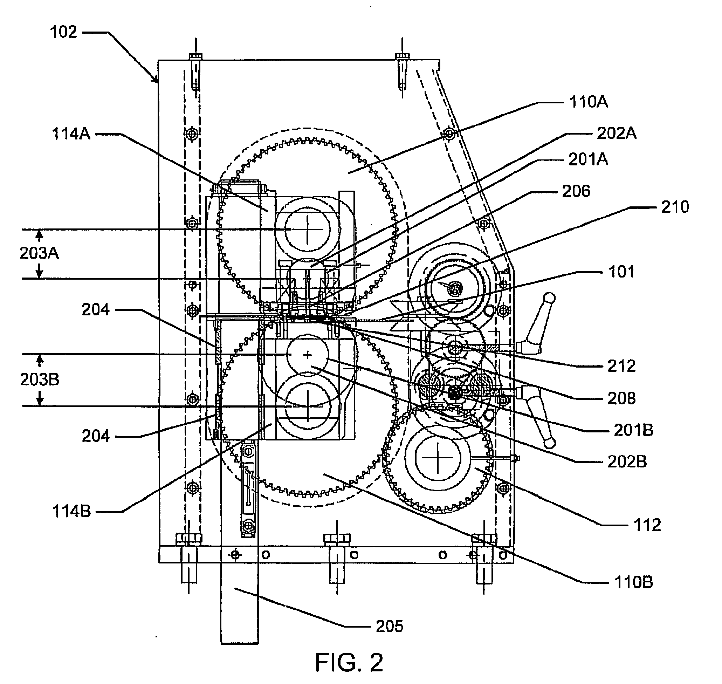

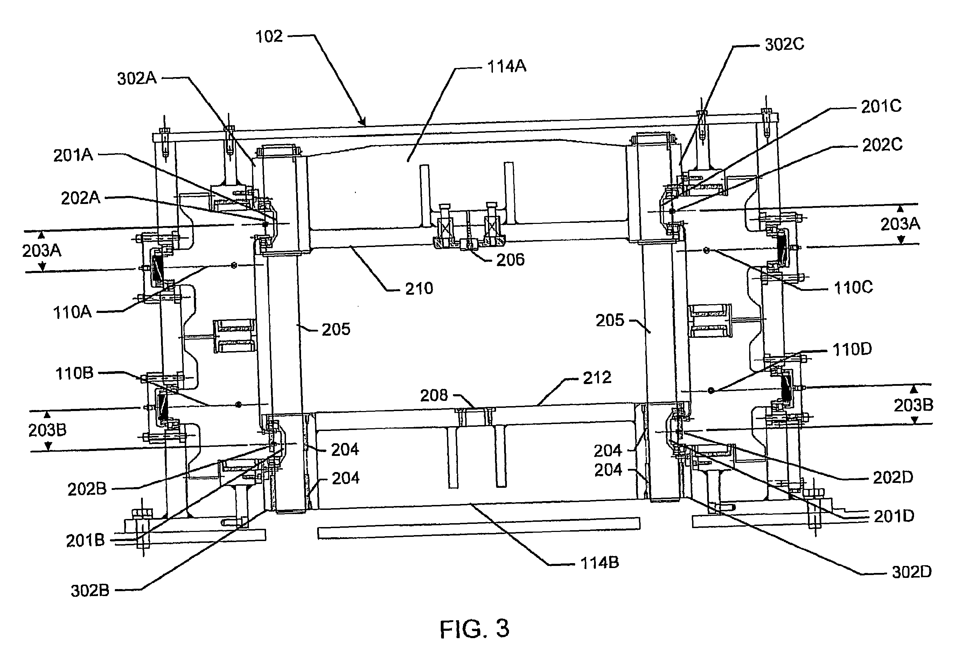

FIG. 2 is an enlarged side elevational view of the example rotary press 102 of FIG. 1. Although FIG. 2 only depicts one side end of the rotary press 102, another side end of the rotary press 102 that includes substantially similar or identical components as those described below in connection with FIG. 2 may be seen in FIGS. 3-4. As shown in FIG. 2, the rotary press 102 includes the upper ram 114A, the lower ram 114B, the upper spur gear 110A, the lower spur gear 110B, and the drive gear 112 described in connection with FIG. 1 above. The upper ram 114A and the lower ram 114B include an upper journal 201A and a lower journal 201B, respectively. The upper spur gear 110A includes an upper stub shaft 202A that protrudes from the upper spur gear 110A and the lower spur gear 110B includes a lower stub shaft 202B that protrudes from the lower spur gear 110B. Additionally, the upper ram 114A is mechanically coupled in a fixed position to a linear guide 205 and the lower ram 114B is slidably coupled to the linear guide 205 via linear bearings 204.

A material cutting or penetration tool including cooperative or mating first and second tool members 206 and 208 may include any conventional or nonconventional press tooling such as, for example, a punch and die set or a cut-off blade and cut-off ram set, etc. The cutting tool members 206 and 208 are mechanically coupled to a pressing face 210 of the upper ram 114A and a pressing face 212 of the lower ram 114B, respectively. The pressing face 210 opposes the pressing face 212 so that the upper ram 114A and the lower ram 114B work cooperatively to shear, punch, or otherwise cut or penetrate the material 101 as it moves through the press 102 using the cutting tool members 206 and 208.

As shown in FIG. 2, the drive gear 112, the lower spur gear 110B, and the upper spur gear 110A form a direct-drive system. In the direct-drive system, a drive motor (not shown) may directly drive (e.g., without any other interposing mechanism or device such as a transmission or the like) the drive gear 112. In such a direct drive system, the drive gear 112 directly drives the lower spur gear 110B to rotate about its rotational axis and the lower spur gear 110B then directly drives the upper spur gear 110A to rotate about its rotational axis in a counter-rotating direction relative to the lower spur gear 110B. Alternatively, other drive configurations may be used if desired. For example, various drive members may be coupled to each other using any combination of chains, belts, frictional engagement devices, fluid couplings, etc. Of course, one or more of the gears 110A, 110B, and 112 may be replaced with pulleys, sprockets, or any other suitable drive members.

Turning in greater detail to the rams 114A and 114B, the upper ram 114A and the lower ram 114B are rotatably coupled to the upper spur gear 110A and the lower spur gear 110B, respectively, at off-center positions. More specifically, the upper ram 114A is rotatably coupled to the upper spur gear 110A, via the upper journal 201A and the upper stub shaft 202A, at an upper off-center distance 203A from the rotational axis of the upper spur gear 110A. Thus, when the upper spur gear 110A rotates about its rotational axis, the upper stub shaft 202A rotates within the upper journal 201A, thereby causing the pressing face 210 of the upper ram 114A to travel along at least a portion of a generally circular path or a generally elliptical path relative to the rotational axis of the upper spur gear 110A.

Similarly, the lower ram 114B is rotatably coupled to the lower spur gear 110B, via the lower journal 201B and the lower stub shaft 202B, at a lower off-center distance 203B from the rotational axis of the lower spur gear 110B. The lower spur gear 110B rotates about its rotational axis in a counter-rotating direction relative to the upper spur gear 110A, causing the lower stub shaft 202B to rotate within the lower journal 201B, thereby causing the pressing face 212 of the lower ram 114B to travel in a direction (opposite the direction traveled by the pressing face 210) along at least a portion of a generally circular path or a generally elliptical path relative to the rotational axis of the lower spur gear 110B.

The upper ram 114A and the lower ram 114B may be configured to stay in substantially fixed vertical alignment with each other so that the pressing face 210 of the upper ram 114A and the pressing face 212 of the lower ram 114B are maintained in a substantially fixed opposing orientation throughout the rotation of the spur gears 110A and 110B. In particular, the rams 114A and 114B may be configured to stay in substantially fixed relative vertical alignment by the journals 201A and 201B, the stub shafts 202A and 202B, the linear guide 205, and the linear bearings 204. The upper journal 201A and the lower journal 201B are mechanically coupled to the stub shafts 202A and 202B, respectively, and may be implemented using any type of rotational bearings such as, for example, ball or roller bearings, sleeve bearings, etc. The rotational bearings enable the stub shafts 202A and 202B to rotate freely within their respective rams 114A and 114B. As a result, as the spur gears 110A and 110B rotate about their respective rotational axes, the pressing face 210 of the upper ram 114A and the pressing face 212 of the lower ram 114B travel along their respective generally circular paths or generally elliptical paths about the upper journal 201A and the lower journal 201B, respectively.

The upper ram 114A is mechanically coupled in a fixed position to the linear guide 205 and the lower ram 114B is slidably coupled via the linear bearings 204 to the linear guide 205. Additionally, the upper ram 114A and the lower ram 114B are constrained by the linear guide 205 to move relative to each other along substantially parallel (e.g., coplanar) paths. In the example of FIG. 2, the linear guide 205 holds the rams 114A and 114B so that the pressing faces 210 and 212 remain substantially parallel to a horizontal plane as the spur gears 110A and 110B rotate about their respective rotational axes. More specifically, the upper ram 114A is coupled in a fixed position to the linear guide 205 via clamps, set screws, pressure couplings, any combination thereof, or any other suitable mechanism for holding the upper ram 114A and the linear guides 205 in a fixed position relative to each other. As the upper spur gear 110A rotates, the upper ram 114A and the linear guide 205 are held in a fixed position relative to each other so that the pressing face 210 travels along a generally circular path relative to the rotational axis of the upper spur gear 110A. In this manner, as the upper spur gear 110A rotates, the linear guide 205 holds the upper ram 114A so that the pressing face 210 remains substantially parallel to the material 101.

The lower ram 114B is slidably coupled to the linear guide 205 via the linear bearings 204. The linear bearings 204 may be implemented using any type of bearing that enables linear translation along the linear guide 205. Additionally, the linear bearings 204 enable the lower ram 114B to slide or translate along a path that is parallel to the longitudinal axis of the linear guide 205. As the upper ram 114A and the linear guide 205 move, the lower ram 114B travels along a generally circular path relative to the rotational axis of the lower spur gear 110B. As a result, the lower ram 114B slides or translates along a path that is substantially parallel to the longitudinal axis of the linear guide 205. In this manner, as the lower spur gear 110B rotates, the linear guide 205 and the linear bearings 204 work cooperatively to hold the lower ram 114B in a substantially vertical orientation so that the pressing face 212 remains substantially parallel to the pressing face 210. In other words, the linear guides 205, the journals 201A and 201B, and the stub shafts 202A and 202B cause the upper ram 114A and the lower ram 114B to travel in substantially parallel, but opposite, directions relative to each other as the spur gears 110A and 110B counter-rotate.

As the pressing faces 210 and 212 travel in opposing rotational directions along respective generally circular or eccentric paths, the cutting tool members 206 and 208 work cooperatively to shear, punch, or otherwise cut or penetrate the material 101 as it moves through the rotary press 102. As described above, the cutting tool member 206 may be mechanically coupled to the pressing face 210 and the cutting tool member 208 (which is complementary to the cutting tool member 206) may be mechanically coupled to the pressing face 212. Thus, as the pressing faces 210 and 212 travel along their respective generally circular paths, the faces of the cutting tool members 206 and 208 are held substantially parallel to each other.

As the rams 114A and 114B travel along their respective generally circular paths, the rams 114A and 114B move or reciprocate in opposite directions along substantially parallel (e.g., coplanar) paths. The distance between the cutting tool members 206 and 208 is related to the location of the rams 114A and 114B on their respective generally circular paths. In FIG. 2, the rams 114A and 114B are shown in a pressing position (i.e., a position that enables the rams 114A and 114B to shear, punch, or otherwise cut or penetrate the material 101). In the pressing position, the rams 114A and 114B are located at a position on their respective generally circular paths so that the distance between the cutting tool members 206 and 208 is at a minimum.

The counter-rotation of the spur gears 110A and 110B causes the rams 114A and 114B to have horizontal translation components that enable the cutting tool members 206 and 208 (when the cutting tool members 206 and 208 are at the pressing position) to substantially match the translational speed of the surfaces of the material 101 as it moves through the rotary press 102. In this manner, the cutting tool members 206 and 208 can punch, shear, or otherwise cut or penetrate the material 101 without interrupting the continuous movement of the material 101 through the rotary press 102.

FIG. 3 is a front elevational view of the example rotary press 102 of FIGS. 1 and 2 in an open-ram configuration. FIG. 3 shows both side ends of the rotary press 102. As noted above, both side ends of the rotary press 102 include substantially similar or identical components. The side end of the rotary press 102 indicated by a first end 302A of the upper ram 114A and a first end 302B of the lower ram 114B includes the spur gears 110A and 110B, the journals 201A and 201B, and the stub shafts 202A and 202B described in greater detail in connection with FIGS. 1 and 2 above. The side end of the rotary press 102 indicated by a second end 302C of the upper ram 114A and a second end 302D of the lower ram 114B includes an upper spur gear 110C, a lower spur gear 110D, an upper journal 201C, a lower journal 201D, an upper stub shaft 202C protruding from the upper spur gear 110C, and a lower stub shaft 202D protruding from the lower spur gear 110D. As described in greater detail in connection with FIG. 2 above, the upper ram 114A is mechanically coupled in a fixed position to the linear guides 205 at the first end 302A and the second end 302C and the lower ram 114B is slidably coupled to the linear guides 205 via linear bearings 204 at the first end 302B and the second end 302D.

As shown, the upper ram 114A is disposed between and rotatably coupled to the upper spur gears 110A and 110C and the lower ram 114B is disposed between and rotatably coupled to the lower spur gears 110B and 110D. In particular, the first end 302A and the second end 302C include respective upper journals 201A and 201C, which are rotatably coupled to the upper stub shafts 202A and 202C, respectively. The stub shafts 202A and 202C protrude from their respective upper spur gears 110A and 110C at the off-center distance 203A from the rotational axis of the upper spur gears 110A and 110C. The first end 302B and the second end 302D include respective lower journals 201B and 201D, which are rotatably coupled to their respective lower stub shafts 202B and 202D. The lower stub shafts 202B and 202D protrude from the lower spur gears 110B and 110D at the off-center distance 203B from the rotational axis of the lower spur gears 110B and 110D.

As the upper spur gears 110A and 110C rotate about their rotational axis, the upper ram 114A travels along a generally circular path, which causes the linear guides 205 to move along the same generally circular path while maintaining a substantially fixed position relative to the upper ram 114A. Additionally, as the lower spur gears 110B and 110D rotate about their rotational axis in a counter-rotating direction relative to the upper spur gears 110A and 110C, the lower ram 114B travels along a generally circular path. As the lower ram 114B travels along its generally circular path, the linear bearings 204 enable the lower ram 114B to be translationally displaced along the longitudinal axis of the linear guides 205.

The linear guides 205 hold the rams 114A and 114B in substantially vertical alignment with each other as the rams 114A and 114B travel along their respective generally circular paths. Additionally, the journals 201A, 201C, 201B, and 201D, the stub shafts 202A, 202C, 202B, and 202D enable the pressing faces 210 and 212 of the rams 114A and 114B to remain substantially parallel to the material 110 (FIG. 1) as the spur gears 110A, 110C, 110B, and 110D rotate and the rams 114A and 114B move along respective generally circular paths or generally elliptical paths.

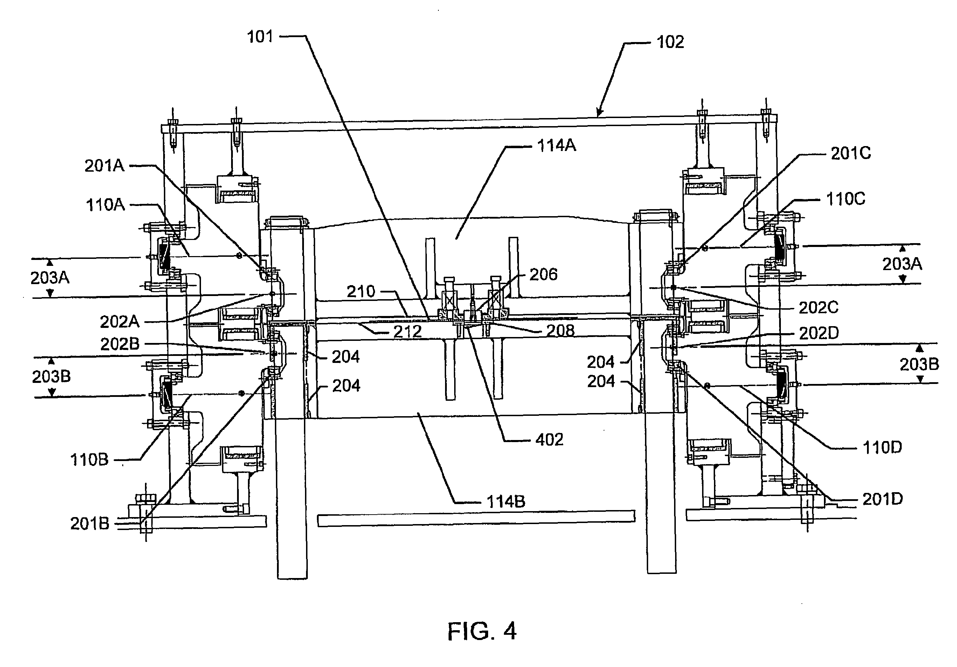

FIG. 4 is a front elevational view of the example rotary press 102 of FIGS. 1 and 2 in a closed-ram configuration. In particular, the upper ram 114A and the lower ram 114B are shown in a pressing position so that the pressing faces 210 and 212 are at a minimum separation from each other. As the rams 114A and 114B and, thus, the cutting tool members 206 and 208 meet the material 101 at the pressing position, the material 101 may be punched to remove a portion 402 as the material 101 moves through the rotary press 102.

The journals 201A, 201C, 201B, and 201D move along generally circular paths or generally elliptical paths relative to the rotational axes of the spur gears 110A, 110C, 110B, and 110D that maintain a substantially constant off-center distance 203A and 203B from the rotational axis of their respective spur gear 110A, 110C, 110B, and 110D. Additionally, stub shafts 202A, 202C, 202B, and 202D rotate freely within their respective journals 201A, 201C, 201B, and 201D enabling the rams 114A and 114B to travel along respective generally circular paths and meet at the pressing position while being held in substantial vertical alignment with each other. Thus, the distance between the pressing face 210 and the pressing face 212 changes (e.g., by reciprocating in opposite directions along substantially parallel paths) as the spur gears 110A, 110C, 110B, and 110D rotate about their respective rotational axes. As the pressing faces 210 and 212 approach and depart from the pressing position depicted in FIG. 4, the cutting tool members 206 and 208 work cooperatively to shear, punch, or otherwise cut or penetrate the material 101.

By way of example, in FIG. 4, the cutting tool member 206 is a punch and the cutting tool member 208 is a complementary die. In this example, as the rams 114A and 114B approach the pressing position, the punch 206 and the die 208 drive into opposing surfaces of the material 101 and, as the rams 114A and 114B travel through the pressing position, the punch 206 and the die 208 may completely punch through the material 101 without interrupting the movement of the material 101 through the rotary press 102. In this manner, as shown in FIG. 4, the punch 206 and the die 208 work cooperatively to punch through the material 101, thereby enabling the rotary press 102 to repeatedly punch the material 101 (e.g., by removing portions such as the portion 402) as the material 101 continuously moves through the rotary press 102.

In another example, the cutting tool member 206 may be a cut-off blade and the cutting tool member 208 may be a cut-off ram. In that example, as the rams 114A and 114B approach the pressing position, the cut-off blade 206 and the cut-off ram 208 may begin to shear the material 101. As the rams 114A and 114B travel through the pressing position, the cut-off blade 206 and the cut-off ram 208 may completely shear through the material 101, thereby resulting in separating a section (not shown) of material from the material 101. Such a shearing process may be continuously repeated as the material 101 travels through the rotary press 102.

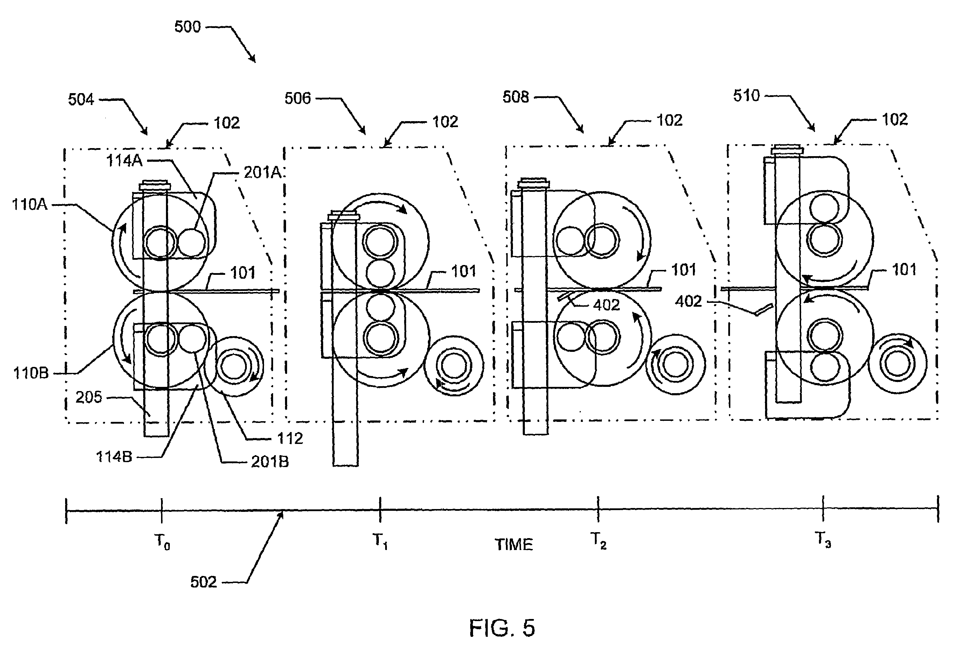

FIG. 5 is an example time sequence view 500 depicting the operation of the example rotary press 102 of FIGS. 1 and 2. In particular, the example time sequence 500 shows the time varying relationship between the drive gear 112, the spur gears 110A and 110B, the journals 201A and 201B, the rams 114A and 114B, and the linear guide 205 during operation of the rotary press 102. As shown in FIG. 5, the example time sequence 500 includes a time line 502 and depicts the rotary press 102 at several times during its operation. More specifically, the rotary press 102 is depicted in a sequence of rotary press phases indicated by a T₀ phase 504, a T₁ phase 506, a T₂ phase 508, and a T₃ phase 510. As the upper spur gear 110A rotates in a clockwise direction and the lower spur gear 110B rotates in a counter-clockwise direction, the rotary press 102 progresses through the phases 504, 506, 508, and 510. As depicted in FIG. 5, as the rotary press 102 progresses through the phases 504, 506, 508, and 510, the rams 114A and 114B approach and travel through a pressing position in the same direction as the direction traveled by a material (i.e., the material 101 of FIG. 1). Although FIG. 5 depicts only one side of the rotary press 102, both sides of the rotary press 102 shown in FIGS. 3 and 4 work cooperatively to enable operation of the rotary press 102 according to the example operational sequence shown in FIG. 5.

Now turning in greater detail to the operation of the rotary press 102, the drive gear 112 is directly engaged to the lower spur gear 110B, which is directly engaged to the upper spur gear 110A. The drive gear 112 may be driven by a drive motor (not shown) in a clockwise direction. The drive gear 112 causes the lower spur gear 110B to rotate in a counter-clockwise direction, which causes the upper spur gear 110A to rotate in a clockwise direction. As the spur gears 110A and 110B counter-rotate, the rams 114A and 114B travel along their respective generally circular paths as depicted by the rotary press phases 504, 506, 508, and 510. As is also depicted in FIG. 5, the rams 114A and 114B are held in substantially vertical alignment relative to each other as they travel along their respective paths. In addition, the pressing faces 210 and 212 (FIG. 2) of the rams 114A and 114B are held in a substantially parallel relationship relative to each other throughout the operational phases 504, 506, 506, and 510.

The T₀ phase 504 shows the rams 114A and 114B as they approach a pressing position. The T₁ phase 506 shows the rams 114A and 114B as they travel through the pressing position in which the distance between the pressing faces 210 and 212 (FIG. 2) is at a minimum. The T₂ phase 508 shows the rams 114A and 114B as they travel away from the pressing position. The T₃ phase 510 shows the rams 114A and 114B at a position in which the pressing faces 210 and 212 are separated from each other by the greatest amount of distance. Additionally, at the T₃ phase 510, the rams 114A and 114B begin to approach each other as they travel toward the pressing position again.

As shown by the rotary press phases 504, 506, 508, and 510, the pressing face 210 (FIG. 2) of the upper ram 114A travels along at least a portion of a generally circular or eccentric path with respect to the rotational axis of the spur gears 110A and 110C and the pressing face 212 (FIG. 2) of the lower ram 114B travels along at least a portion of a generally circular or eccentric path with respect to the rotational axis of the spur gears 110B and 110D. In this manner, the upper ram 114A and the lower ram 114B travel toward and away from each other along substantially parallel paths during different phases of operation.

The rotation of the spur gears 110A, 110C, 110B, and 110D causes the motion of the rams 114A and 114B to include vertical translation components and to move at least partially in opposing directions perpendicular to the translation of the material 101. As depicted in FIG. 5, the rams 114A and 114B engage opposing sides of the material 101 as shown by the vertical transition of the rams 114A and 114B from the T₀ phase 504 to the T₁ phase 506. When in the pressing position, as shown in the T1 phase 506, the cutting tool members 206 and 208 (FIG. 2) shear, punch, or otherwise cut or penetrate the material 101 and may remove the portion 402 (FIG. 4) of the material 101 as shown in phases 508 and 510. Additionally, as shown by the horizontal transitions of the rams 114A and 114B in the phases 504, 506, and 508, the rotation of the spurs gears 110A, 110C, 110B, and 110D causes the motion of the rams 114A and 114B to include horizontal translation components and to travel at least partially in a direction parallel to the translation of the material 101. Thus, when in the pressing position shown by the T₁ phase 506, the rams 114A and 114B travel in the same direction as the material 101. In this manner, the cutting tool members 206 and 208 can shear, punch, or otherwise cut or penetrate the material 101 without interrupting the movement of the material 101 as it travels through the rotary press 102.

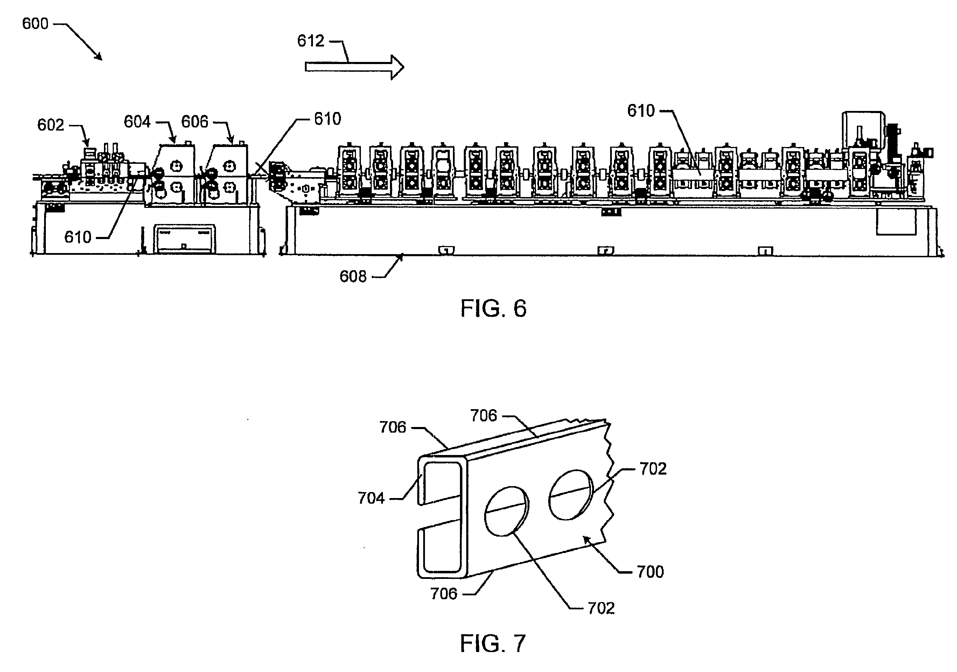

FIG. 6 is an example material forming process 600 that uses the example rotary press 102 of FIGS. 1 and 2. The example material forming process 600 includes a material feed unit 602, a punching rotary press 604, a shearing rotary press 606, and a roll-former unit 608. In particular, the punching rotary press 604 and the shearing rotary press 606 are substantially similar or identical to the example rotary press 102 of FIGS. 1 and 2. The example material forming process 600 may be used to process a continuously moving material such as, for example, the moving material 101 of FIG. 1.

Additionally, the example material forming process 600 may be used in combination with other processes that handle or process a material. For example, the example material forming process 600 may be an implemented within an assembly line and perform a subset of operations of the assembly line. Alternatively, the example material forming process 600 may be a standalone process that forms a self-contained assembly line performing substantially all of the operations of the assembly line. Although, the example rotary press 102 is generally shown in the process configuration of the example material forming process 600, any other configuration using any other process operations with the example rotary press 102 may be implemented instead.

As the moving material 101 moves through the example material forming process 600 along a material translation path 610 in a direction generally indicated by a movement arrow 612, the example material forming process 600 may be configured to alter the shape, form, and/or other aesthetic characteristics of the moving material 101. In particular, by way of example, the example material forming process 600 is configured to punch, shear, and rollform the moving material 101 based on the punching rotary press 604, the shearing rotary press 606, and the roll-former unit 608 to produce an item such as, for example, the example beam 700 of FIG. 7. The example beam 700 is made from a flat sheet (planar) material (i.e., the moving material 101) that is fed by the material feed unit 602 toward the punching rotary press 604. As described in greater detail below, the flat sheet material is processed by the punching rotary press 604, the shearing rotary press 606, and the roll-former unit 608 to form the example beam 700.

The moving material 101 (FIG. 1) is fed or propelled toward the punching rotary press 604 by the material feed unit 602 along the material translation path 610. The punching rotary press 604 may be configured to punch the moving material 101. For example, the punching rotary press 604 may include cutting tools such as, for example, a punch that is mechanically coupled to an upper ram (e.g., the upper ram 114A of FIGS. 1 and 2) and a die that is mechanically coupled to a lower ram (e.g., the lower ram 114B of FIGS. 1 and 2) that punch cutout portions (e.g., holes) into the moving material 101. The punching rotary press 604 may be configured to create any type of cutout portions at any position on the moving material 101. Additionally, the positioning of cutout portions may be configured and specified by the configuration of a punch and die set. An example punch and die set configuration may include a punch and a die that punch cutout portions in any configuration such as, for example, serial, parallel, staggered, etc. The material feed unit 602 then feeds or propels the moving material 101 toward the shearing rotary press 606.

The shearing rotary press 606 may be configured to shear (e.g., cut, slice, etc.) the moving material 101 (FIG. 1) into sections of any desired length to form a plurality of material segments of the moving material 101 that have sheared edges and travel along the material translation path 610 in a serial manner. The shearing rotary press 606 may be configured to shear the moving material 101 by, for example, using a cut-off blade and cut-off ram mechanically coupled to the upper ram 114A (FIGS. 1 and 2) and the lower ram 114B (FIGS. 1 and 2), respectively. The material segments are taken away from the shearing rotary press 606 by the roll-former unit 608.

The roll-former unit 608 includes roll tooling (not shown) that takes away the material segments from the shearing rotary press 606. The material moving speeds of the material feed unit 602 and the roll tooling may be substantially matched to move the moving material at substantially similar speeds. The roll-former unit 608 is configured to rollform a flat sheet material by obtaining the material segments from the shearing rotary press 606 and providing a continuous process in which the material segments are passed through a series of roller dies that form each material segment into a desired shape such as, for example, the shape of the example beam 700 (FIG. 7). In general, the roll-former unit 608 may be configured to fold the material segments by creating any desired edge or edges based on the roller dies.

FIG. 7 is an isometric view of a portion of an example beam 700 that may be produced by the example material forming process 600 of FIG. 6. The example beam 700 includes, a plurality of cutout portions 702, a sheared edge 704, and a plurality of edges 706. Additionally, the example beam 700 may be produced from a flat sheet material (e.g., the moving material 101 of FIG. 1). Although the example beam 700 is an item that may be produced by the example material forming process 600, the example material forming process 600 may be configured to form other items having other configurations such as, for example, different folds and different cutout portions.

The plurality of cutout portions 702 may be produced by the punching rotary press 604 of FIG. 6. The cutout portions 702 are produced by configuring the punching rotary press 604 to repeatedly punch the moving material 101 (FIG. 1) obtained from the material feed unit 602 (FIG. 6). The plurality of cutout portions 702 are shown on the example beam 700 as a plurality of circular holes that are punched in a serial manner. However, the plurality of cutout portions 702 may be implemented as any other shape and in any position relative to each other such as, for example, serial, parallel, staggered, etc.

The sheared edge 704 may be produced by the shearing rotary press 606 of FIG. 6. The sheared edge 704 is produced by configuring the shearing rotary press 606 to repeatedly shear the moving material 101 (FIG. 1) and produce material segments of any desired length.

The plurality of edges 706 may be produced by the roll-former unit 608 of FIG. 6. The plurality of edges 706 are produced by configuring the roll-former unit 608 to obtain the material segments from the punching rotary press 604 (FIG. 6) and fold the material segments using a series of roller dies.

Although certain methods and apparatus have been described herein, the scope of coverage of this patent is not limited thereto. To the contrary, this patent covers all methods and apparatus fairly falling within the scope of the appended claims either literally or under the doctrine of equivalents.

## Claims

1. A rotary press apparatus comprising:
a first rotating member;
a second rotating member;
a first ram having a first ram face and first and second ram ends, wherein the first ram end is rotatably coupled to the first rotating member at an off-center position of the first rotating member and the second ram end is rotatably coupled to the second rotating member at an off-center position of the second rotating member;
a third rotating member;
a fourth rotating member; and
a second ram having a second ram face and third and fourth ram ends, wherein the third ram end is rotatably coupled to the third rotating member at an off-center position of the third rotating member and the fourth ram end is rotatably coupled to the fourth rotating member at an off-center position of the fourth rotating member, and wherein rotation of the first, second, third, and fourth rotating members causes the first and second ram faces to move relative to each other and to reciprocate in opposing directions along substantially parallel paths.

2. An apparatus as defined in claim 1, wherein complimentary cutting tool members are mechanically coupled to the first and second ram faces.

3. An apparatus as defined in claim 2, wherein the complimentary cutting tool members are configured to cut a moving material.

4. An apparatus as defined in claim 1, wherein the complimentary cutting tool members include a punch and a die

5. An apparatus as defined in claim 1, wherein the substantially parallel paths are substantially coplanar.

6. An apparatus as defined in claim 1, wherein a first guide member is mechanically coupled to the first ram.

7. An apparatus as defined in claim 6, wherein the first guide member comprises a linear guide.

8. An apparatus as defined in claim 6, wherein a second guide member is mechanically coupled to the second ram and to the first guide member.

9. An apparatus as defined in claim 8, wherein the second guide member comprises a linear guide.

10. An apparatus as defined in claim 8, wherein the second guide member is slidably coupled to the first guide member.

11. An apparatus as defined in claim 1, wherein the first rotating member comprises a first gear.

12. An apparatus as defined in claim 11, wherein the third rotating member comprises a second gear that is in direct engagement with the first gear.

13. An apparatus as defined in claim 1, wherein the first ram end is rotatably coupled to the first rotating member by a rotating bearing.

14. An apparatus as defined in claim 13, wherein the rotating bearing is coupled to a stub shaft protruding from the first rotating member.

15. An apparatus as defined in claim 1, wherein the first rotating member counter-rotates relative to the third rotating member during operation of the apparatus.

16. An apparatus as defined in claim 1, wherein the first and second ram faces follow respective eccentric paths during operation of the apparatus.

17. A rotary press apparatus comprising:
a first ram rotatably coupled between a first rotating member and a second rotating member in an off-center position relative to a rotational axis of the first and second rotating members; and
a second ram rotatably coupled between a third rotating member and a fourth rotating member in an off-center position relative to a rotational axis of the third and fourth rotating members.

18. An apparatus as defined in claim 17, wherein a first cutting tool member is coupled to the first ram.

19. An apparatus as defined in claim 18, wherein a second cutting tool member is coupled to the second ram in a substantially opposing relationship to the first cutting tool member.

20. An apparatus as defined in claim 19, wherein the first and second cutting tool members comprise a punch and die set.

21. An apparatus as defined in claim 19, wherein the first and second cutting tool members comprise a cut-off blade and ram set.

22. An apparatus as defined in claim 17, wherein the first and third rotating members are engaged in a direct drive configuration.

23. An apparatus as defined in claim 17, wherein a guide member is mechanically coupled to the first ram.

24. An apparatus as defined in claim 17, wherein a guide member is mechanically coupled to the second ram.

25. An apparatus as defined in claim 17, wherein the first ram is rotatably coupled to the first rotating member by a rotating bearing.

26. An apparatus as defined in claim 25, wherein the rotating bearing is rotatably coupled to a stub shaft protruding from the first rotating member.

27. An apparatus as defined in claim 17, wherein the first rotating member counter-rotates relative to the third rotating member during operation of the apparatus.

28. A rotary press system comprising:
a first ram rotatably coupled to at least one rotating member and configured to follow at least a portion of a first generally elliptical path so that at least a portion of the first ram travels in a first direction along the at least a portion of the first generally elliptical path relative to a rotational axis of the at least one rotating member; and
a second ram rotatably coupled to at least another rotating member and configured to follow at least a portion of a second generally elliptical path so that at least a portion of the second ram travels in a second direction opposite of the first direction along the at least a portion of the second generally elliptical path relative to a rotational axis of the at least another rotating member.

29. A system as defined in claim 28, wherein a first material cutting device is coupled to the first ram.

30. A system as defined in claim 29, wherein a second material cutting device is coupled to the second ram generally facing the first material cutting device.

31. A system as defined in claim 30, wherein the first and second material cutting devices cooperate to cut a continuously moving material during operation of the apparatus.

32. A system as defined in claim 28, wherein the first ram and the second ram are configured to move toward opposing surfaces of a moving material.

33. A system as defined in claim 28, wherein the first and second rams are configured to move relative to each other along substantially opposing parallel paths.

34. A system as defined in claim 28, wherein the at least one rotating member and the at least another rotating member are engaged to one another in a direct drive configuration.

35. A system as defined in claim 28, wherein the first generally elliptical path includes a generally circular path.

36. A system as defined in claim 28, wherein the second generally elliptical path includes a generally circular path.

37. A method for cutting a moving material, the method comprising:
moving a first face of a first ram along at least a portion of a first eccentric path and rotating the first ram so that the first face remains substantially parallel to the moving material;
moving a second face of a second ram along at least a portion of a second eccentric path and rotating the second ram so that the second face remains substantially parallel to the moving material;
cutting the moving material as the first and second ram faces pass through a pressing position associated with the first and second eccentric paths.

38. A method as defined in claim 37, wherein cutting the moving material includes at least one of shearing and punching the moving material.

39. A method as defined in claim 37, wherein cutting the moving material comprises engaging a cut-off blade and a cut-off ram on opposing surfaces of the moving material.

40. A method as defined in claim 37, wherein cutting the moving material comprises engaging a punch and a die on opposing sides of the moving material.

41. A method as defined in claim 37, wherein moving the first face of the first ram along at least a portion of the first eccentric path comprises moving the first ram along the at least the portion of the first eccentric path in a counter-rotating direction relative to moving the second face of the second ram along at least the portion of the second eccentric path.

42. A method as defined in claim 37, wherein moving the first ram along the at least a portion of the first eccentric path and moving the second ram along the at least a portion of the second eccentric path comprises moving the first ram and the second ram along guide members.

43. A system for producing a product from a moving material, the system comprising:
a shearing rotary press configured to produce a plurality of material segments by repeatedly shearing the moving material;
a punching rotary press operatively coupled to the shearing rotary press and configured to punch at least some of the plurality of material segments; and
a roll-former unit operatively coupled to the punching rotary press configured to roll form the plurality of material segments, wherein at least one of the shearing rotary press and the punching rotary press includes a first rotating member, a second rotating member, a third rotating member, a fourth rotating member, a first ram, and a second ram, wherein the first ram comprises a first ram face and first and second ram ends, wherein the first ram end is rotatably coupled to the first rotating member at an off-center position of the first rotating member and the second ram end is rotatably coupled to the second rotating member at an off-center position of the second rotating member, wherein the second ram comprises a second ram face and third and fourth ram ends, wherein the third ram end is rotatably coupled to the third rotating member at an off-center position of the third rotating member and the fourth ram end is rotatably coupled to the fourth rotating member at an off-center position of the fourth rotating member, and wherein rotation of the first, second, third, and fourth rotating members causes the first and second ram faces to move relative to each other and to reciprocate in opposing directions along substantially parallel paths.

44. A system as defined in claim 43, wherein complimentary cutting tool members are mechanically coupled to the first and second ram faces.

45. A system as defined in claim 44, wherein the complimentary cutting tool members are configured to cut a moving material.

46. A system as defined in claim 43, wherein the plurality of material segments move through the shearing rotary press, the punching rotary press, and the roll-former unit in a substantially continuous manner.

47. A system as defined in claim 43, wherein the shearing rotary press includes a cut-off blade and a cut-off ram.

48. A system as defined in claim 43, wherein the punching rotary press includes a punch and die set.

49. A method of producing a product from a moving material, the method comprising:
shearing the moving material;
punching the moving material; and
roll forming the moving material to produce the product, wherein at least one of shearing the moving material and punching the moving material comprises moving a first face of a first ram along at least a portion of a first eccentric path, rotating the first ram so that the first face remains substantially parallel to the moving material, moving a second face of a second ram along at least a portion of a second eccentric path, rotating the second ram so that the second face remains substantially parallel to the moving material, and cutting the moving material as the first and second ram faces pass through a pressing position associated with the first and second eccentric paths.

50. A method as defined in claim 49, wherein cutting the moving material comprises engaging a cut-off blade and a cut-off ram on opposing surfaces of the moving material.

51. A method as defined in claim 49, wherein cutting the moving material comprises engaging a punch and a die on opposing sides of the moving material.

52. A method as defined in claim 49, wherein the moving material moves through at least part of a material processing system in a substantially continuous manner.

53. A method as defined in claim 49, wherein moving the first face of the first ram along at least a portion of a first eccentric path comprises moving the first ram along the at least the portion of the first eccentric path in a counter-rotating direction relative to moving the second face of the second ram along at least the portion of the second eccentric path.

54. A method as defined in claim 49, wherein moving the first ram along the at least a portion of the first eccentric path and moving the second ram along the at least a portion of the second eccentric path comprises moving the first ram and the second ram along guide members.
